# EUROPEAN PATENT APPLICATION

(11) **EP 4 586 582 A1**
(43) Date of publication of application: **16.07.2025**
(21) Application number: 24151561.8
(22) Date of filing: 12.01.2024
(51) Int. Cl.: H04L 47/125, H04W 88/08

(54) **POLICY CONTROL FOR CONTROL PLANE ENTITIES**

(71) Applicant: Nokia Technologies Oy, 02610 Espoo (FI)
(72) Inventor: KAASALAINEN, Janne Veikko, Söderkulla (FI); DECARREAU, Guillaume, Munich (DE); TOMALA, Malgorzata, Wroclaw (PL); AWAN, Daniyal Amir, Munich (DE); HENTTONEN, Tero, Espoo (FI)
(74) Representative: Nokia EPO representatives

(57) **Abstract**

Example embodiments of the present disclosure relate to devices, methods, apparatuses and storage medium for policy control for control plane entities. In a method, a policy device receives respective characteristics of a plurality of control plane devices which host one or more states and/or context of one or more terminal devices. Based on the respective characteristics of the control plane devices, the policy device determines one or more user plane policies for the control plane devices and a plurality of control plane policies for the control plane devices.

## Description

### FIELDS

Various example embodiments of the present disclosure generally relate to the field of telecommunication and in particular, to devices, methods, apparatuses and computer readable storage medium for policy control for control plane (CP) entities.

### BACKGROUND

As the fifth generation (5G) stage has moved to the 5G-Advanced stage, the development of the sixth generation (6G) is getting accelerated. Compared with previous wireless generations, the requirements for 6G are going to be more varied and usually more stringent, especially in terms of higher throughput and lower delay.

In 5G, the network architecture was split to allow distributed network deployments (i.e. Central Unit (CU)-Distributed Unit (DU) split) and disaggregation of certain network elements. In this way, the Control Plane (CP) being anchored in CU (as described in 4G), but the CP functionalities are split between a CU and a DU. This causes extensive signaling between a CU and a DU since the DU is in charge of lower layer configurations (i.e. Physical (PHY), Medium Access Control (MAC), Radio Link Control (RLC)) and the CU is in charge of the other layer configurations (i.e. Packet Data Convergence Protocol (PDCP), Service Data Adaptation Protocol (SDAP), Radio Resource Control (RRC)).

### SUMMARY

In a first aspect of the present disclosure, there is provided a control plane device. The control plane device comprises at least one processor; and at least one memory storing instructions that, when executed by the at least one processor, cause the control plane device at least to: transmit, to a policy device, a characteristic of a control plane device; and receive, from the policy device, a control plane policy for the control plane device. The control plane device hosts at least one of one or more states or context of one or more terminal devices.

In a second aspect of the present disclosure, there is provided a policy device. The policy device comprises at least one processor; and at least one memory storing instructions that, when executed by the at least one processor, cause the policy device at least to: receive, from a plurality of control plane devices, respective characteristics of the plurality of control plane devices, the plurality of control plane devices hosting at least one of one or more states or context of one or more terminal devices; generate, based on the respective characteristics of the plurality of control plane devices, one or more user plane policies for the plurality of control plane devices and a plurality of control plane policies for the plurality of control plane devices.

In a third aspect of the present disclosure, there is provided a load balancing device. The load balancing device comprises at least one processor; and at least one memory storing instructions that, when executed by the at least one processor, cause the load balancing device at least to: receive, from a policy device, respective characteristics of a plurality of control plane devices, the plurality of control plane devices hosting at least one of one or more states or context of one or more terminal devices; and transmit, to the policy device, based on the respective characteristics of the plurality of control plane devices, at least one of one or more user plane policies or a plurality of control plane policies for the plurality of control plane devices.

In a fourth aspect of the present disclosure, there is provided a user plane device. The user plane device comprises at least one processor; and at least one memory storing instructions that, when executed by the at least one processor, cause the user plane device at least to: receive, from a policy device, a user plane policy for one or more control plane devices, where the one or more control plane devices host at least one of one or more states or context of one or more terminal devices; receive a message from a terminal device of the one or more terminal devices; and forward, based on the routing rule, the message to a target control plane device of the one or more control plane devices.

In a fifth aspect of the present disclosure, there is provided a method. The method comprises: transmitting, to a policy device, a characteristic of a control plane device; and receiving, from the policy device, a control plane policy for the control plane device, where the control plane device hosts at least one of one or more states or context of one or more terminal devices.

In a sixth aspect of the present disclosure, there is provided a method. The method comprises: receiving, from a plurality of control plane devices, respective characteristics of the plurality of control plane devices, the plurality of control plane devices hosting at least one of one or more states or context of one or more terminal devices; determining, based on the respective characteristics of the plurality of control plane devices, one or more user plane policies for the plurality of control plane devices and a plurality of control plane policies for the plurality of control plane devices.

In a seventh aspect of the present disclosure, there is provided a method. The method comprises: receiving, from a policy device, respective characteristics of a plurality of control plane devices, the plurality of control plane devices hosting at least one of one or more states or context of one or more terminal devices; and transmitting, to the policy device, based on the respective characteristics of the plurality of control plane devices, at least one of one or more user plane policies or a plurality of control plane policies for the plurality of control plane devices.

In an eighth aspect of the present disclosure, there is provided a method. The method comprises: receiving, from a policy device, a user plane policy for one or more control plane devices, where the one or more control plane devices host at least one of one or more states or context of one or more terminal devices; receiving a message from a terminal device of the one or more terminal devices; and forwarding, based on the routing rule, the message to a target control plane device of the one or more control plane devices.

In a ninth aspect of the present disclosure, there is provided an apparatus. The apparatus comprises means for transmitting, to a policy device, a characteristic of a control plane device; and means for receiving, from the policy device, a control plane policy for the control plane device, where the control plane device hosts at least one of one or more states or context of one or more terminal devices.

In a tenth aspect of the present disclosure, there is provided an apparatus. The apparatus comprises means for receiving, from a plurality of control plane devices, respective characteristics of the plurality of control plane devices, the plurality of control plane devices hosting at least one of one or more states or context of one or more terminal devices; means for determining, based on the respective characteristics of the plurality of control plane devices, one or more user plane policies for the plurality of control plane devices and a plurality of control plane policies for the plurality of control plane devices.

In an eleventh aspect of the present disclosure, there is provided an apparatus. The apparatus comprises means for receiving, from a policy device, respective characteristics of a plurality of control plane devices, the plurality of control plane devices hosting at least one of one or more states or context of one or more terminal devices; and means for transmitting, to the policy device, based on the respective characteristics of the plurality of control plane devices, at least one of one or more user plane policies or a plurality of control plane policies for the plurality of control plane devices.

In a twelfth aspect of the present disclosure, there is provided an apparatus. The apparatus comprises means for receiving, from a policy device, a user plane policy for one or more control plane devices, where the one or more control plane devices host at least one of one or more states or context of one or more terminal devices; means for receiving a message from a terminal device of the one or more terminal devices; and means for forwarding, based on the routing rule, the message to a target control plane device of the one or more control plane devices.

In a thirteenth aspect of the present disclosure, there is provided a computer readable medium. The computer readable medium comprises instructions stored thereon for causing an apparatus to perform at least the method according to the fifth aspect, the sixth aspect, the seventh aspect or the eighth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling diagram for a process of policy control for CP entities;
FIG. 3 illustrates a flowchart of an example process of registration for CP service in accordance with some example embodiments of the present disclosure;
FIG. 4 illustrates an example process of a radio resource control (RRC) setup in accordance with some example embodiments of the present disclosure;
FIG. 5 illustrates an example process of changes in a network quality of service (NQoS) triggering policy update in accordance with some example embodiments of the present disclosure;
FIG. 6 illustrates an example process of another RRC setup in accordance with some example embodiments of the present disclosure;
FIG. 7 illustrates a flowchart of an example method implemented at a control plane device in accordance with some example embodiments of the present disclosure;
FIG. 8 illustrates a flowchart of an example method implemented at a policy device in accordance with some example embodiments of the present disclosure;
FIG. 9 illustrates a flowchart of an example method implemented at a load balancing device in accordance with some example embodiments of the present disclosure;
FIG. 10 illustrates a flowchart of an example method implemented at a user plane device in accordance with some example embodiments of the present disclosure;
FIG. 11 illustrates a simplified block diagram of a device that is suitable for implementing example embodiments of the present disclosure; and
FIG. 12 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, an access point (AP) in sub-network, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Central Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

In 5G, CP functionalities are based on a split architecture where Central Unit-Control Plane (CU-CP), Central Unit-User Plane (CU-UP) and DU components all includes CP functionalities. Responsibility splits of the individual components are defined by 3rd Generation Partnership Project (3GPP), which includes the interfaces between those components (i.e. F1 interface between a CU-CP and a DU, and E1 interface between a CU-CP and a CU-UP).

The gNB disaggregation is described in the 3GPP standards, e.g., 3GPP TS 38.401. In the current split architecture, the radio resource control (RRC) function of the UE is only located in the CU-CP but DU can provide part of UE RRC configuration to CU-CP via F1AP messages (i.e. the 5G RRC IE *CellGroupConfig* is fully generated by the DU). gNB Central Unit (gNB-CU) is a logical node hosting RRC, SDAP and PDCP protocols of the gNB, or RRC and PDCP protocols of the en-gNB that controls the operation of one or more gNB-DUs. The gNB-CU terminates the F 1 interface connected with the gNB-DU.

When a radio access network (RAN) is designed to work with multiple CP entities, the network needs to select a suitable CP anchoring point for each UE or service. For example, it is possible that the UE delivers to the network the information (e.g. a routing ID) that allows the network to route UE RRC message to the correct CP entity. However, an open problem is how the network is organized and how it can decide where to locate the CP assignment for different UEs or services.

Example embodiments of the present disclosure propose a policy control solution. This solution introduces a policy device is introduced provide a user plane policy that indicates mapping to one or more of a plurality of control plane devices which host state(s) and/or context of one or more terminal devices (e.g., UEs). The policy device further provides a control plane policy that is to be used by one of the plurality of control plane devices. The control plane policy may indicate a list of cells, one or more services or one or more terminal devices. The user plane and control plane policies are determined based on respective characteristics of the plurality of control plane devices. In some example embodiments, the user plane and control plane policies, e.g., to distribute the load between the plurality of control plane devices.

In this way, the network can make quality analysis for different control plane devices and assigns possible and optimal cell sets for the control plane devices. Upon reception of the user plane policy, the user plane device may forward a message from the terminal device to the target control plane device which is appropriate for the terminal device. Furthermore, the control plane device may receive the control plane policy based on its own characteristic and then the control plane device can enable UE state and configuration management to map to optimal cell sets and define overall UE routing policy. As part of functionality is mostly UE specific, a more flexible network building is allowed, and multiple network entities are also allowed to configure RRC configuration for the UE.

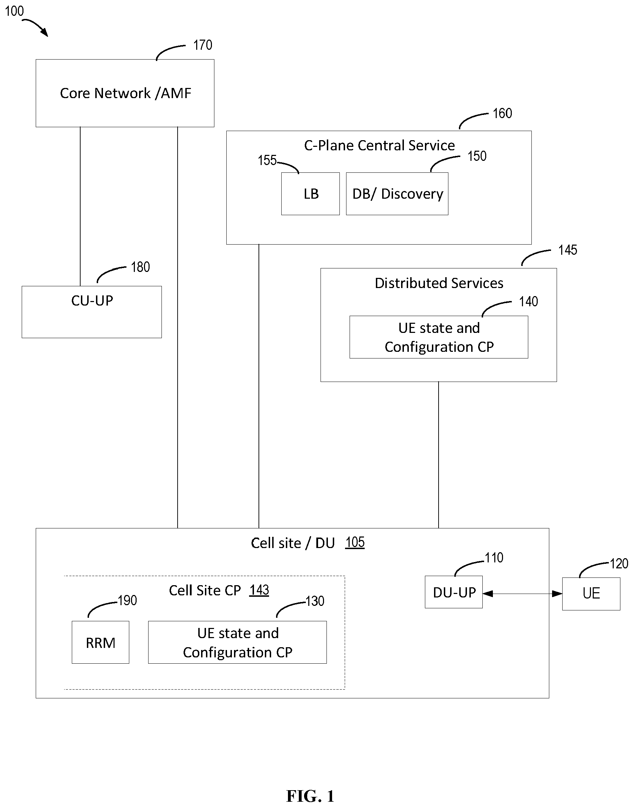

FIG. 1 illustrates an example communication environment 100 in which example embodiments of the present disclosure can be implemented.

In the communication environment 100, an access network (also called a RAN) is deployed in a distributed manner. As shown in FIG. 1, the communication environment 100 comprises a DU 105 which is deployed at a cell site and which operates as a split part of an access network device. A user plane entity of the DU 105 (also referred to as DU-UP) 110 may communicate with a terminal device such as a UE 120.

As shown in FIG. 1, an access network (also called RAN) is controlled by multiple control plane devices which comprise a UE state and configuration CP 130 and a UE state and configuration CP 140. In this example, the UE state and configuration CP 130 is located in a control plane device of the DU 105 (e.g., a cell site CP 143). As shown in FIG. 1, the cell site CP 143 further comprises a radio resource management device (e.g., a RRM 190) for radio resource management of the UE 120. The UE state and configuration CP 140 is located in a distributed service device 145. The UE state and configuration CP 130 and the UE state and configuration CP 140 may be functions located in other existing network elements, devices or nodes. Alternatively, or in addition, the UE state and configuration CP 130 and/or the UE state and configuration CP 140 may be a standalone network element, device or nods.

In addition, the UE state and configuration CP 130 and the UE state and configuration CP 140 have different characteristics and locations so that they may provide different level of service for the UE 120. Example interfaces in FIG. 1 are defined as point-to-point like in 5G RAN. However, in future RAN interfaces could be service-based interfaces.

The context of a terminal device (e.g., UE context) may be hosted in the UE state and configuration CP 130 or the UE state and configuration CP 140, both of which are examples of "consumer network entity". The "consumer network entity" provides CP characteristics of a service to a policy device also called a "policy-defining network entity" (e.g. a database (DB)/ Discovery 150 in FIG. 1), which then provides mapping of required network entities to use for the service. The "policy-defining network entity" may additionally communicate with a load balancing device also called a "load-balancing network entity" (e.g. LB 155 in FIG. 1) to determine the policy to apply for a given service (e.g. to distribute the load between multiple network entities). The DB/ Discovery 150 is an example of the policy device and the LB 155 is an example of a load balancing device. Then a C-plane central service 160 may assign the policy to the DU 105 for management of the UE state and configuration CP 130, i.e. allowing the DU 105 to assign a control plane device for the UE 120.

The communication environment 100 may further comprise a CU-UP 180 for performing a user-plane function of a CU which may operate as another split part of the access network device. The communication environment 100 may further comprise a core network such as an Access and Mobility Management Function (AMF) 170.

It is to be understood that the number and types of devices are shown in FIG. 1 for the purpose of illustration without suggesting any limitation. For example, the communication environment 100 may comprise any number and type of devices.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

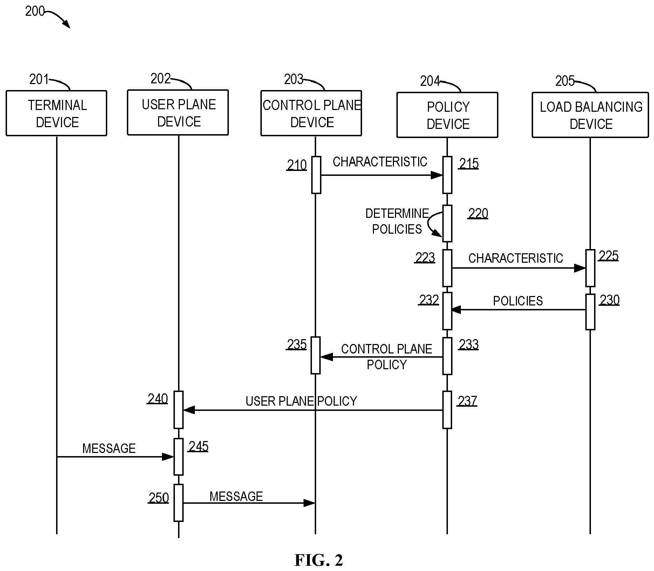

In the communication environment 100, the network may manage UE state and context configuration in multiple CP entities that can be in different network locations. In the case that the RAN is deployed in a distributed manner, it allows different characteristics for the different CP entities (e.g., the UE state and configuration CP 130 and the UE state and configuration CP 140) which can be used to configure and maintain the UE's RRC configuration. One CP entity may be able to process many UEs with highly scalable central processing unit (CPU) resources whereas another CP entity may be able to provide low-latency services with limited CPU processing for some cells. In some example embodiments, the network may analyze different UE states and configuration management entities and assign appropriate policies (e.g., cell/radio sets) to be used for the CP entities. Some example implementations will be described below with reference to FIGS. 2 to 6.

FIG. 2 illustrates a signaling diagram of a process 200 of policy control for CP entities according to some example embodiments of the present disclosure. For the purpose of illustration, the process 200 will be described with reference to FIG. 1.

A control plane device 203 in FIG. 2 hosts at least one of a one or more states of context of one or more terminal devices including a terminal device 201. The control plane device 203 may be in a different location such as a distributed unit (DU) or a distributed service device (e.g. a data center). In some example embodiments, the control plane device 203 may be in a distributed unit of an access network device (e.g., the DU 105), or a distributed service device (e.g., the distributed service device 145). An example of the control plane device 203 may be the UE state and configuration CP 130 in the DU 105 and the UE state and configuration CP 140 in the distributed service device 145.

As shown in FIG. 2, the control plane device 203 may transmit (210), to a policy device 204 (e.g., the DB/ Discovery 150), a characteristic of the control plane device 230. In some example embodiments, the characteristic of the control plane device 230 may be included in a registration request transmitted by the control plane device 203 to the policy device 204. The characteristic of the control plane device 203 may comprise characteristics with respect to any capability of the control plane device 203. In an example, the characteristic of the control plane device 203 may be at least related to a network quality of service (NQoS) of the control plane device. Alternatively, or in addition, the characteristic of the control plane device 203 may be related to the QoS level that a combination of the control plane and the user plane can provide for the terminal device 201. The control plane device 203 includes initial service characteristics, which may include parameters related to NQoS. NQoS includes CPU capacity, latency for a user plane device 202, scalability and redundancy capability, an estimation how well a particular control plane device may handle different cells, and other UE state and configuration services to which it has connection.

In some example embodiments, the control plane device 203 may transmit, to the policy device 204, a request for the control plane policy, and the control plane policy may be received from the policy device in response to transmitting the request for the control plane policy. The control plane device 203 may transmit the request for the control plane policy to order the control plane policy.

After transmitting the request for the control plane policy to the policy device, the control plane device 203 may receive (235), from the policy device 204, a control plane policy for the control plane device. The control plane policy may indicate one or more terminal devices and/or the like to be served by the control plane device 203. In some example embodiments, the control plane policy may indicate a list of cells to be to used by the control plane device 203, e.g., for one or more services or terminal devices.

In some example embodiments, the control plane device 203 may transmit, to the policy device 204, a subscription for a policy update. The control plane policy may change over time and the control plane device 203 may order an updated policy by subscribing to the policy device 204. An indication that a new control plane policy is available may be received from the policy device after transmitting the subscription.

In some example embodiments, the control plane device 203 may receive, from the policy device 204, the indication that the new control plane policy is available. After receiving the indication that the new control plane policy is available, the control plane device 203 may transmit the request for the control plane policy to the policy device 204. In this way, the control plane device 203 may obtain the updated policy in time and apply the updated policy to respective UEs, thereby improving network efficiency.

In some example embodiments, the control plane device 203 may transmit, to a load balancing device 205 (e.g., the LB 155), a policy update request indicating an updated characteristic of the control plane device 203. For example, if a load exceeds a predetermined threshold in the control plane device 203, then the characteristic of the control plane device 203 updates. The control plane device 203 may transmit the policy update request indicating an updated characteristic of the control plane device 203 to the load balancing device 205, to facilitate the load balancing device 205 to generate a new control plane policy.

In some example embodiments, the control plane device 203 may receive, from a user plane device 202 (e.g., the DU-UP 110), a message from a terminal device 201 (e.g., the UE 120) of the one or more terminal devices. Upon reception of this message, the control plane device 203 may transmit, based on the control plane policy, a second routing identifier to the terminal device 201. The second routing identifier is mapping to a list of cells.

In some example embodiments, in response to receiving the message from the terminal device 201, the control plane device 203 may determine that a radio resource management (RRM) configuration for the terminal device 201 is unavailable at the control plane device. Because the control plane device 203 does not have its own RRM configuration, it will request an RRM configuration from another device. Then, based on the determining, the control plane device 203 may transmit, to a radio resource management device (e.g., the RRM 190), a request for the radio resource management configuration and receive, from the radio resource management device, the radio resource management configuration. The RRM configuration may include parameters for measurement configuration in the UE, such as some thresholds for handover (HO) to neighboring cells. The second routing identifier is transmitted to the terminal device 201 after receiving the radio resource management configuration from the radio resource management device.

In some example embodiments, the control plane policy may include one or more categories of one or more cells in a list of cells. The one or more categories of the one or more cells may indicate whether there is a better control plane device for these cells. All or some cells in the list of cells may have the corresponding categories. In some example embodiments, the control plane device 203 may determine, based on the one or more categories of the one or more cells, that at least one cell of the one or more cell is to be used by a further control plane device. Then, the control plane device 203 may transmit, to the further control plane device, at least one of at least one of state or context of at least one terminal device from the one or more terminal devices. The at least one terminal device is served by the at least one cell to be used by the further control plane device.

As shown in FIG. 2, after the control plane device 203 transmits (210) the characteristic of the control plane device 230 to the policy device 204, the policy device 204 receives (215) the characteristic of the control plane device 230. The policy device 204 may further receive respective characteristics of one or more other control plane device 203. The plurality of control plane devices host context of one or more terminal devices. In some example embodiments, these control plane devices may host the same context of the same terminal device(s).

In some example embodiments, the respective characteristic of the plurality of control plane devices may be at least related to respective network qualities of service (NQoS) of the plurality of control plane devices. The characteristics of the control plane devices includes initial service characteristics, which may include parameters related to NQoS. NQoS includes CPU capacity, latency for a user plane device, scalability and redundancy capability, an estimation how well a particular control plane device may handle different cells, and other UE state and configuration services to which it has connection.

In some example embodiments, the plurality of control plane devices are in different locations. The control plane devices may be in a DU or a cloud environment (e.g. data center).

After receiving the respective characteristics of the plurality of control plane devices, the policy device 204 may determine (220), based on the respective characteristics of the plurality of control plane devices, one or more user plane policies for the plurality of control plane devices and a plurality of control plane policies for the plurality of control plane devices. In an example, a user plane policy of the one or more user plane policies indicates a routing rule for one or more control plane devices of the plurality of control plane devices, and a control plane policy of the plurality of control plane policies is to be used by the control plane device 203 of the plurality of control plane devices.

In some example embodiments, in order to determine the user plane policy and control plane policy, the policy device 204 may transmit (223), to the load balancing device 205, the respective characteristics of the plurality of control plane devices and receive (232), from the load balancing device 205, the one or more user plane policies and the plurality of control plane policies for the plurality of control plane devices.

In some example embodiments, the policy device 204 may receive, from the load balancing device 205, a policy update indicating at least one of an updated user plane policy or an updated control plane policy for at least one control plane device of the plurality of control plane devices 203. In this way, once the load balancing device 205 generates an update policy, the policy device 204 knows there is an update and is able to notify the policy update to a user plane device 202 (e.g., the DU-UP 110) and/or the control plane device 203, and thus they may utilize the updated policies to improve network efficiency.

In some example embodiments, the policy device 204 may transmit (237), to the user plane device 202, a user plane policy of the one or more user plane policies for the plurality of control plane devices in response to receiving a request for a user plane policy from the user plane device 202. In an example, the user plane policy may indicate a routing rule for one or more control plane devices. Based on the routing rule, the user plane device 202 may route the UE uplink (UL) messages to a proper control plane device 203 defined by the routing rule.

In some example embodiments, the policy device 204 may receive, from the user plane device 202, a subscription for a policy update. The policies update if characteristics of the control plane device change, the user plane device 202 may order an updated policy by subscribing to the policy device 204. An indication that a new user plane policy is available may be transmitted after receiving the subscription from the user plane device 202.

In some example embodiments, the policy device 204 may transmit, to the user plane device 202, an indication that a new user plane policy is available. After transmitting the indication, the policy device 204 may receive the request for the user plane policy (i.e. the updated user plane policy) from the user plane device 202.

In some example embodiments, the routing rule for the one or more control plane devices of the plurality of control plane devices includes one or more first routing identifiers mapping to the one or more control plane devices. The first routing identifier is mapped to a corresponding user plane device. 17or example, the first routing identifier "A1" is mapped to the specific user plane device "B1".

In some example embodiments, the routing rule for the one or more control plane devices 203 of the plurality of control plane devices 203 is associated with at least one of: the one or more terminal devices, or one or more services of the one or more terminal devices. The routing rule may be associated with the terminal device 201. However, after the terminal device 201 sends a RRC setup request, the terminal device 201 may not be known but the terminal device 201 may indicate service causes by sending a message which contains a QoS request or service type request (e.g. it is for voice or it is for low latency service). Therefore, the routing rule for the may be associated with one or more services of the one or more terminal devices.

In some example embodiments, the policy device 204 may receive, from the control plane device 203 of the plurality of control plane devices, a request for a control plane policy. In response to the request for the control plane policy, the policy device 204 may transmit (233), to the control plane device, a control plane policy of the plurality of control plane policies for the control plane device 203.

In some example embodiments, the policy device 204 may receive, from the control plane device 203, a subscription for a policy update. The policies update if characteristics of the control plane device change, the control plane device 203 may order an updated policy by subscribing to the policy device 204. An indication that a new control plane policy is available may be transmitted after receiving the subscription from the control plane device 203.

In some example embodiments, the policy device 204 may transmit, to the control plane device 203, an indication that a new control plane policy is available. After transmitting the indication, the policy device 204 may receive the request for the updated control plane policy from the control plane device 203.

In some example embodiments, a control plane policy of the plurality of control plane policies includes a second routing identifier mapping to a list of cells to be used by the control plane device of the plurality of control plane policies. In an example, the control plane policy for the control plane device 203 may include the second routing identifier that is mapped to a list of cells which may be used by the control plane device 203 for the terminal device 201.

As shown in FIG. 2, after the policy device 204 transmits (223), to the load balancing device 205, the respective characteristics of the plurality of control plane devices, the load balance device 205 may receive (225), from the policy device 204, the respective characteristics of the plurality of control plane devices.

In some example embodiments, if a load exceeds a predetermined threshold in the control plane device 203, then the characteristic of the control plane device 203 updates. Then the load balance device 205 may receive, from the control plane device 203 of the plurality of control plane devices, a policy update request indicating an updated characteristic of the control plane device. Furthermore, the load balance device 205 may generate an updated user plane policy or an updated control plane policy based on these updated characteristics and transmit, to the policy device 204, a policy update indicating at least one of an updated user plane policy or an updated control plane policy for at least one control plane device of the plurality of control plane devices.

As shown in FIG. 2, the user plane device 202 may receive (240), from the policy device 204, a user plane policy for one or more control plane devices. The one or more control plane devices host context of one or more terminal devices. In addition, the user plane policy indicates a routing rule based on one or more characteristics of the one or more control plane devices.

In some example embodiments, the user plane device 202 may transmit, to the policy device 204, a request for the user plane policy and receive the user plane policy from the policy device in response to the request.

In some example embodiments, the user plane device 202 may transmit, to the policy device 204, a subscription for a policy update. The policies update if characteristics of the control plane device change, the user plane device 202 may order an updated policy by subscribing to the policy device 204. An indication that a new user plane policy is available may be received from the policy device 204 after transmitting the subscription.

In some example embodiments, the user plane device 202 may receive, from the policy device, an indication that a new user plane policy is available. After receiving the indication, the user plane device 202 may transmit the request for the user plane policy (i.e. the updated user plane policy) to the policy device 204.

The user plane device 202 may receive (245) a message from the terminal device 201 of the one or more terminal devices and forward (250), based on the routing rule, the message to a target control plane device (e.g., the control plane device 203) of the one or more control plane devices. In an example, the target control plane device may be the control plane device having better NQoS, such as higher processing capability, higher scalability and redundancy capability, etc. among a plurality of control plane devices.

In some example embodiments, the routing rule includes one or more first routing identifiers mapping to the one or more control plane devices. Based on the first routing identifiers, the user plane device 202 may forward (250) the message of the terminal device 201 to the target control plane device.

In some example embodiments, the routing rule indicates a plurality of control plane devices ranking in an order and the user plane device 202 may select, based on the order, a first control plane device from the one or more control plane devices. For example, the user plane device 202 may select the first control plane device with the highest ranking. However, the first control plane device may sometimes be unavailable, based on determining that the first control plane device is unavailable, the user plane device 202 may select, based on the order, a second control plane device from the one or more control plane devices as the target control plane device. For example, the second control plane device may be the second ranked control plane device 203.

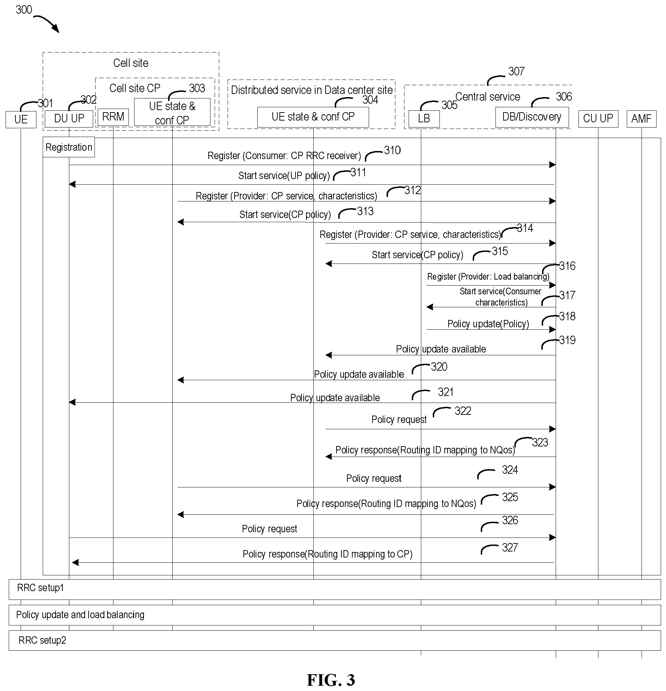

Some example policy control processes will be described in detail below with reference to FIGS. 3 to 6. In this example, a UE 301 operates as an example implementation of the terminal device 201 in FIG. 2, a DU UP 302 operates as an example implementation of the user plane device 202 in FIG. 2 and a UE state & conf CP 303 in the Cell site and a UE state & conf CP 304 in the Distributed service in Data center site collectively operate as an example implementation of the control plane device 203 in FIG. 2. A LB 305 operates as an example implementation of the load balancing device 205 in FIG. 2 and a DB/ Discovery 306 operates as an example implementation of the policy device 204 FIG. 2.

FIG. 3 illustrates a flowchart of an example process 300 of registration for a CP service in accordance with some example embodiments of the present disclosure.

As shown in FIG. 3, in the process 300, at 310, the DU UP 302 transmits a register request (as an example implementation of the request for the user plane policy) to the DB/ Discovery 306 to register as a consumer for multi-CP service. DU UP 301 indicates that it needs routing rules for the CP entity that may handle RRC protocol and orders for policy updates. At 311, the DU UP 302 receives initial policy rules (as an example implementation of user plane policy) from the DB/ Discovery 306 where the initial policy rules may be based on default settings. At 312, the UE state & conf CP 303 transmits a register request (as an example implementation of the characteristic of the control plane device) to the DB/ Discovery 306 to register as a service provider and orders for policy updates. The CP service includes initial service characteristics which may include parameters related to NQoS. NQoS includes CPU capacity, latency for the DU UP 301, scalability and redundancy capability, an estimation how well a particular control plane device may handle different cells, and other UE state and configuration services to which it has connection. At 313, the UE state & conf CP 303 receives a control plane policy and the CP service provided by the UE state & conf CP 303 may be started. Similarly, at 314, the UE state & conf CP 304 also registers as a service provider and orders for policy updates. This CP service also includes initial characteristics. In addition, this CP service may not have any direct mapping to the any cells but it may have connection to multiple DU Ups 302 and to multiple cell site UE state & conf services. At 315, the UE state & conf CP 304 receives a control plane policy and the CP service provide by the UE state & conf CP 303 may be started. The control plane policy includes allowed cell sets.

At 316, the LB 305 transmits a register request to the DB/ Discovery 306 to register as a service provider for load balancing and the LB 305 may be an internal part of the central service 307. At 317, the LB 305 receives characteristics of different CP services. Based on these characteristics, the LB 305 may assign routing rule mapping to different CP devices and define cells that these CP devices may handle. The LB 305 prepares a routing ID (as an example implementation of the first routing identifier) mapping to a UE state & conf CP to deliver to the routing ID to the DU UP 302. At 318, the LB 305 indicates to the DB/ Discovery 306 that new policy rules are available.

From 319 to 327, the DB/ Discovery 306 of the central service 307 indicates that new policy is available for those that has subscribed the policy updates. The DU UP 302, the UE state & conf CP 303 and the UE state & conf CP 304 request and obtain the new policy. For example, the policy sent to DU UP 302 includes a routing ID mapping to a UE state & conf CP. The policy sent to UE state & conf CP 303 and the UE state & conf CP 304 includes a routing ID (as an example implementation of the second routing identifier) mapping to a list of cells they may use.

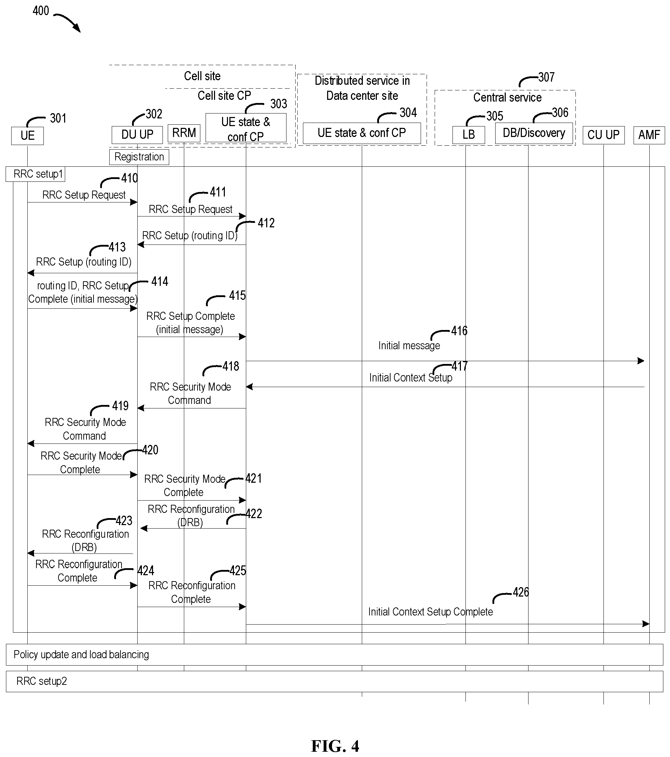

FIG. 4 illustrates an example process 400 of a RRC setup in accordance with some example embodiments of the present disclosure.

As shown in FIG. 4, at 410, the UE 301 transmits a RRC setup request to the DU UP 302. At 411, the DU UP 302 has routing rules based on NQoS policy and the DU UP 302 routes the RRC message to the UE state & conf CP 303 in the cell site. At this moment, the UE 301 may not be known but the UE 301 may indicate service causes and thus the DU UP is able to make routing decisions. At 412, the UE state & conf CP 303 adds the routing ID to the RRC message based on the policy rules received from the DB/ Discovery 306. At 413, the DU UP 302 delivers the RRC message for the UE 301. At 414, the UE 301 uses this specific routing ID in all messages that include RRC message. The DU UP 302 may have stored the routing ID for the specific UE (e.g. identified with cell radio network temporary identifier (C-RNTI)), and is able to route the UE UL messages based on the UE identifier (e.g. C-RNTI). From 415 to 426, UE connection setup continues normally.

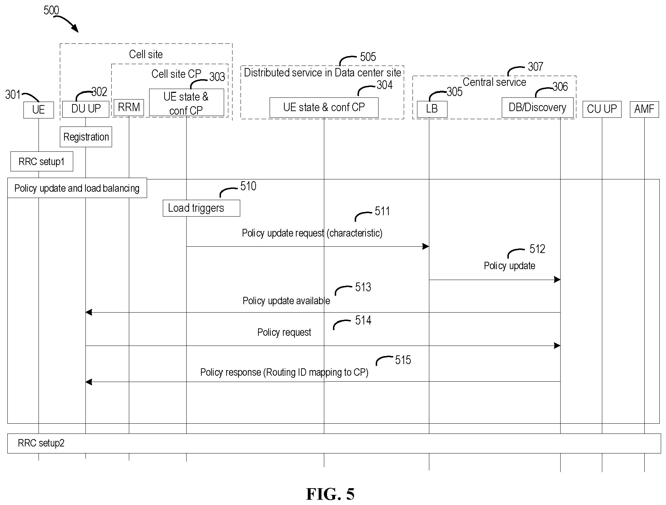

FIG. 5 illustrates an example process 500 of changes in NQoS triggering policy update in accordance with some example embodiments of the present disclosure.

As shown in FIG. 5, at 510, for example, a load exceeds a threshold in the UE state & conf CP 303 in the cell site. At 511, UE state & conf CP 303 transmits policy update (as an example implementation of the subscription for the policy update) which includes updated characteristics to the LB 305. At 512, the LB 305 defines new routing ID mapping rules and or initial RRC request handling routing rules. The rule may indicate that now all or certain UEs will be started in the UE state & conf CP 304 in the data center site 505. If the order includes command to start all RRC connection for UEs in data center site 505, the UE state & conf CP 304 may still redirect and relocate the later UE handling to another CP entity by delivering the UE context for another CP entity and configuring the first RRC message for the UE to include needed routing ID. From 513 to 515, the DB/ Discovery 306 deliveries the new policy rule to the DU UP 302.

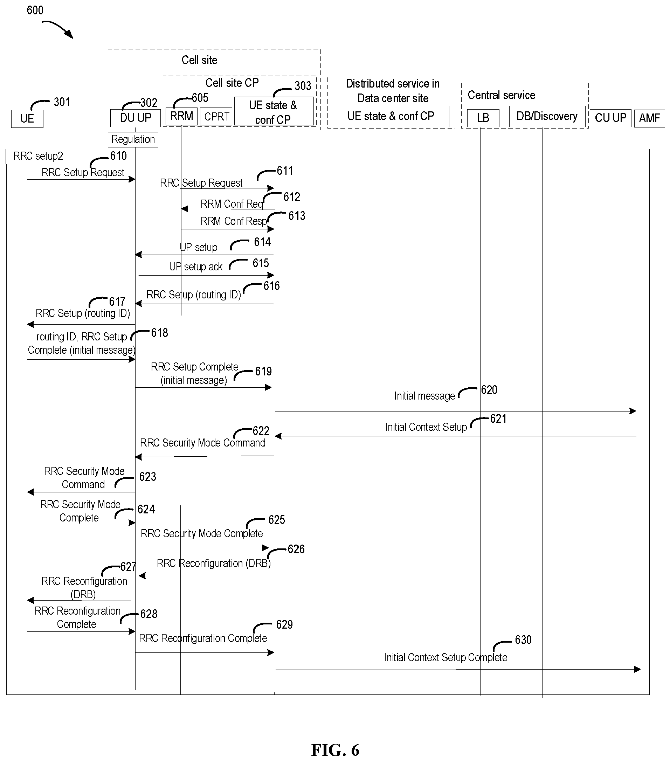

FIG. 6 illustrates an example process 600 of another RRC setup in accordance with some example embodiments of the present disclosure.

As shown in FIG. 6, at 610, the UE 301 transmits a RRC setup request to the DU UP 302. At 611, the DU UP 302 routes the RRC message to the UE state & conf CP 304 in cell site based on policy rules. At this moment, the UE 301 may not be known but the UE 301 may indicate service causes and thus the DU UP 302 is able to make routing decisions. At 612, because the UE state & conf CP 303 does not have own RRM configuration, the UE state & conf CP 303 transmits the RRM configuration request to the RRM 605. At 613, the UE state & conf CP 303 receives the RRM configuration from the RRM 605. The RRM configuration may include parameters for measurement configuration in the UE 301, such as some thresholds for HO to neighboring cells. At 614, the UE state & conf CP 303 transmits a UP setup to the DU UP 302. At 615, the DU UP 302 transmits a UP setup ack to the UE state & conf CP 303. At 616 and 617, the UE state & conf CP 303 transmits a routing ID (as an example implementation of the second routing identifier) to the UE 301 via the DU UP 302. From 618 to 630, UE connection setup continues normally.

### Example Methods

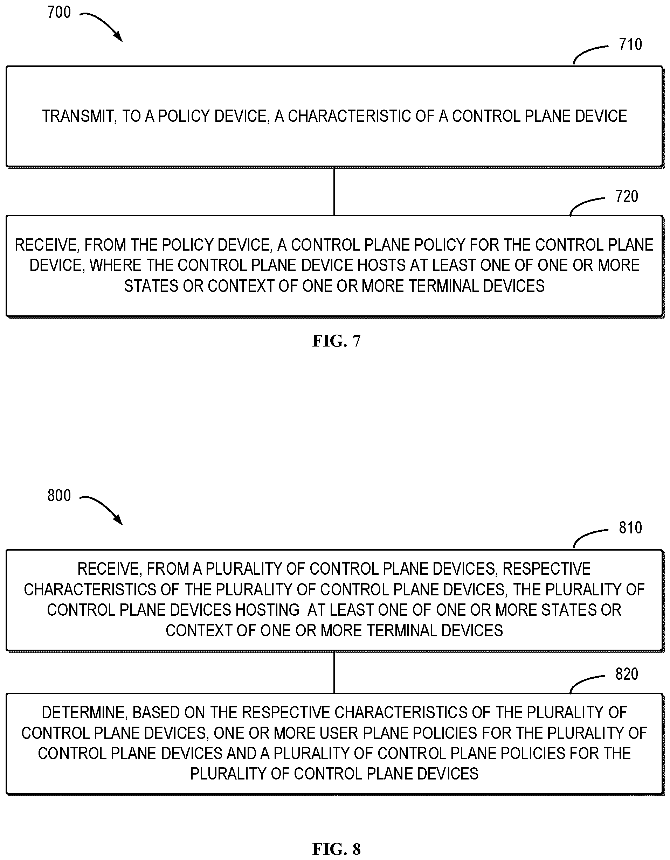

FIG. 7 shows a flowchart of an example method 700 implemented at a control plane device in accordance with some example embodiments of the present disclosure. For the purpose of discussion, the method 700 will be described from the perspective of the control plane device 203 in FIG. 2.

At block 710, the control plane device 203 transmits, to a policy device, a characteristic of a control plane device.

At block 720, the control plane device 203 receives, from the policy device, a control plane policy for the control plane device. The control plane device hosts at least one of one or more state or context of one or more terminal devices.

In some example embodiments, the control plane policy may be used by the control plane device.

In some example embodiments, the control plane policy may indicate a list of cells to be used by the control plane device.

In some example embodiments, the characteristic of the control plane device may be related to a network quality of service of the control plane device.

In some example embodiments, the control plane device 203 may transmit, to the policy device, a request for the control plane policy. In these example embodiments, the control plane policy may be received from the policy device in response to transmitting the request for the control plane policy.

In some example embodiments, the control plane device 203 may receive, from the policy device, an indication that a new control plane policy is available. In these example embodiments, the request for the control plane policy may be transmitted to the policy device in response to receiving the indication that the new control plane policy is available.

In some example embodiments, the control plane device 203 may transmit, to the policy device, a subscription for a policy update. In these example embodiments, the indication that the new control plane policy may be available is received from the policy device after transmitting the subscription.

In some example embodiments, the control plane device 203 may transmit, to the policy device, a registration request including the characteristic of a control plane device.

In some example embodiments, the control plane device 203 may transmit to a load balancing device, a policy update request indicating an updated characteristic of the control plane device.

In some example embodiments, the control plane device 203 may receive, from a user plane device, a message from a terminal device of the one or more terminal devices. Based on the control plane policy, the control plane device 203 may transmit a second routing identifier to the terminal device, the second routing identifier being mapping to the list of cells.

In some example embodiments, in response to receiving the message from the terminal device, the control plane device 203 may determine that a radio resource management configuration for the terminal device is unavailable at the control plane device. Based on the determining, the control plane device 203 may transmit, to a radio resource management device, a request for the radio resource management configuration. The control plane device 203 may receive, from the radio resource management device, the radio resource management configuration. In these example embodiments, the second routing identifier may be transmitted to the terminal device after receiving the radio resource management configuration from the radio resource management device.

In some example embodiments, the control plane policy may include one or more categories of one or more cells in a list of cells. Based on the one or more categories of the one or more cells, the control plane device 203 may determine that at least one cell of the one or more cell is to be used by a further control plane device. Then, the control plane device 203 may transmit, to the further control plane device, at least one of at least one of state or context of at least one terminal device of the one or more terminal devices, the at least one terminal device being served by the at least one cell to be used by the further control plane device.

In some example embodiments, the control plane device may be in a distributed unit of an access network device, or a distributed service device.

FIG. 8 shows a flowchart of an example method 800 implemented at a policy device in accordance with some example embodiments of the present disclosure. For the purpose of discussion, the method 800 will be described from the perspective of the policy device 204 in FIG. 2.

At block 810, the policy device 204 receives, from a plurality of control plane devices, respective characteristics of the plurality of control plane devices, the plurality of control plane devices hosting at least one of one or more states or context of one or more terminal devices.

At block 820, the policy device 204 determines, based on the respective characteristics of the plurality of control plane devices, one or more user plane policies for the plurality of control plane devices and a plurality of control plane policies for the plurality of control plane devices.

In some example embodiments, a user plane policy of the one or more user plane policies may indicate a routing rule for one or more control plane devices of the plurality of control plane devices, and a control plane policy of the plurality of control plane policies may be used by a control plane device of the plurality of control plane policies.

In some example embodiments, the control plane policy may indicate a list of cells to be used by the control plane device.

In some example embodiments, the plurality of control plane devices may be in different locations.

In some example embodiments, the policy device 204 may receive, from the plurality of control plane devices, a plurality of registration requests including the respective characteristics of the plurality of control plane devices.

In some example embodiments, the respective characteristic of the plurality of control plane devices may be related to respective network qualities of service of the plurality of control plane devices.

In some example embodiments, the policy device 204 may transmit, to a load balancing device, the respective characteristics of the plurality of control plane devices. Then, the policy device 204 may receive, from the load balancing device, the one or more user plane policies and the plurality of control plane policies for the plurality of control plane devices.

In some example embodiments, the policy device 204 may further receive, from a load balancing device, a policy update indicating at least one of an updated user plane policy or an updated control plane policy for at least one control plane device of the plurality of control plane devices.

In some example embodiments, the policy device 204 may receive, from a user plane device, a request for a user plane policy. Then, the policy device 204 may transmit, to the user plane device, a user plane policy of the one or more user plane policies for the plurality of control plane devices.

In some example embodiments, the policy device 204 may transmit, to the user plane device, an indication that a new user plane policy is available. In these example embodiments, the request for the user plane policy may be received from the user plane device in response to transmitting the indication that the new user plane policy is available.

In some example embodiments, the policy device 204 may receive, from the user plane device, a subscription for a policy update. In these example embodiments, the indication that the new control plane policy may be available is transmitted after receiving the subscription from the user plane device.

In some example embodiments, the routing rule for the one or more control plane devices of the plurality of control plane devices may include one or more first routing identifiers mapping to the one or more control plane devices.

In some example embodiments, the routing rule for the one or more control plane devices of the plurality of control plane devices may be associated with at least one of: the one or more terminal devices, or one or more services of the one or more terminal devices.

In some example embodiments, the policy device 204 may receive, from a control plane device of the plurality of control plane devices, a request for a control plane policy. Then, the policy device 204 may transmit, to the control plane device, a control plane policy of the plurality of control plane policies for the control plane device.

In some example embodiments, the policy device 204 may transmit, to the control plane device, an indication that a new control plane policy is available. In these example embodiments, the request for the control plane policy may be received from the control plane device in response to transmitting the indication that the new control plane policy is available.

In some example embodiments, the policy device 204 may receive, from the control plane device, a subscription for a policy update. In these example embodiments, the indication that the new control plane policy is available may be transmitted after receiving the subscription from the control plane device.

In some example embodiments, a control plane policy of the plurality of control plane policies may include a second routing identifier mapping to a list of cells to be used by the control plane device of the plurality of control plane policies.

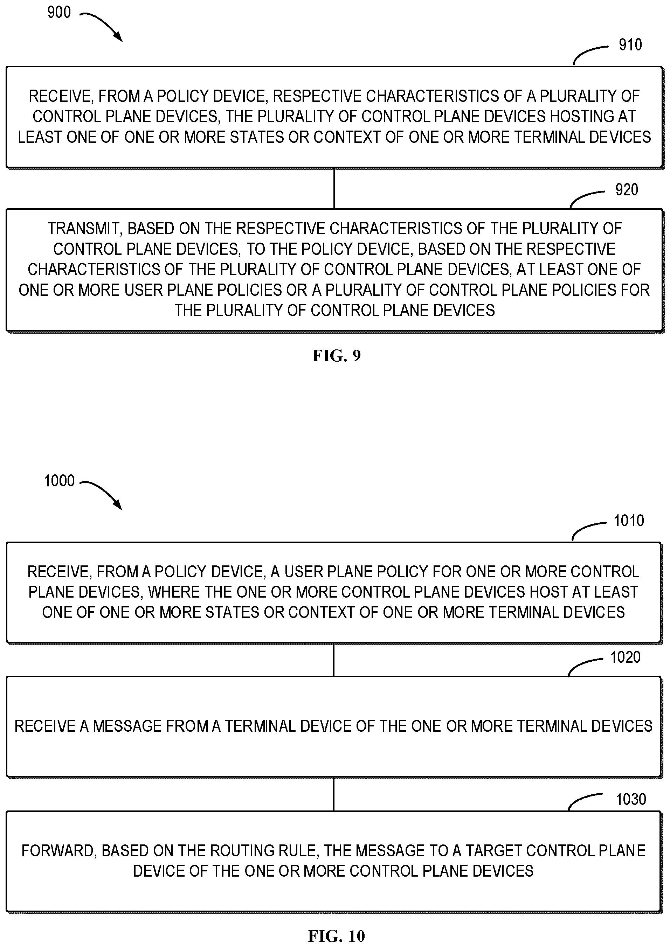

FIG. 9 shows a flowchart of an example method 900 implemented at a load balancing device in accordance with some example embodiments of the present disclosure. For the purpose of discussion, the method 900 will be described from the perspective of the load balancing device 205 in FIG. 2.

At block 910, based on the respective characteristics of the plurality of control plane devices, the load balancing device 205 receives, from a policy device, respective characteristics of a plurality of control plane devices, the plurality of control plane devices hosting at least one of one or more states or context of one or more terminal devices.

At block 920, based on the respective characteristics of the plurality of control plane devices, the load balancing device 205 transmits, to the policy device, at least one of one or more user plane policies or a plurality of control plane policies for the plurality of control plane devices.

In some example embodiments, a user plane policy of the one or more user plane policies may indicate a routing rule for one or more control plane devices of the plurality of control plane devices, and a control plane policy of the plurality of control plane policies may be used by a control plane device of the plurality of control plane devices.

In some example embodiments, the plurality of control plane entities may be in different locations.

In some example embodiments, the respective characteristic of the plurality of control plane devices may be related to respective network qualities of service of the plurality of control plane devices.

In some example embodiments, the load balancing device 205 may receive, from a control plane device of the plurality of control plane devices, a policy update request indicating an updated characteristic of the control plane device. Then, the load balancing device 205 may transmit, to the policy device, a policy update indicating at least one of an updated user plane policy or an updated control plane policy for at least one control plane device of the plurality of control plane devices.

In some example embodiments, the routing rule for the one or more control plane devices of the plurality of control plane devices may include one or more first routing identifiers mapping to the one or more control plane devices.

In some example embodiments, a control plane policy of the plurality of control plane policies may include a second routing identifier mapping to a list of cells to be used by the control plane device of the plurality of control plane policies.

FIG. 10 shows a flowchart of an example method 1000 implemented at a user plane device in accordance with some example embodiments of the present disclosure. For the purpose of discussion, the method 1000 will be described from the perspective of the user plane device 202 in FIG. 2.

At block 1010, the user plane device 202 receives, from a policy device, a user plane policy for one or more control plane devices. The one or more control plane devices host at least one of one or more states or context of one or more terminal devices. In some example embodiments, the user plane policy may indicate a routing rule based on one or more characteristics of the one or more control plane devices.

At block 1020, the user plane device 202 receives a message from a terminal device of the one or more terminal devices.

At block 1030, the user plane device 202 forwards, based on the routing rule, the message to a target control plane device of the one or more control plane devices.

In some example embodiments, the user plane device 202 may transmit, to the policy device, a request for the user plane policy. In these example embodiments, the user plane policy may be received from the policy device in response to transmitting the request for the user plane policy.

In some example embodiments, the user plane device 202 may receive, from the policy device, an indication that a new user plane policy is available. In these example embodiments, the request for the user plane policy may be transmitted in response to receiving the indication that the new user plane policy is available.

In some example embodiments, the user plane device 202 may transmit, to the policy device, a subscription for a policy update. In these example embodiments, the indication that the new control plane policy may be available is received from the policy device after transmitting the subscription.

In some example embodiments, the one or more characteristics of the one or more control plane devices may be related to one or more network qualities of service of the one or more control plane devices.

In some example embodiments, the routing rule may be associated with at least one of: the one or more terminal devices, or one or more services of the one or more terminal devices.

In some example embodiments, the routing rule may include one or more first routing identifiers mapping to the one or more control plane devices.

In some example embodiments, the user plane device 202 may select, based on the order, a first control plane device from the one or more control plane devices. Based on determining that the first control plane device is unavailable, the user plane device 202 may select, based on the order, a second control plane device from the one or more control plane devices as the target control plane device

In some example embodiments, the user plane device may comprise a user plane entity of a distributed unit of an access network device.

All operations and features related to the control plane device 203, the policy device 204, the load balancing device 205 and the user plane device 202 as described above with reference to FIGS. 1 to 6 are likewise applicable to the methods 700 to 1000 and have similar effects. For the purpose of simplification, the details will be omitted.

### Example Apparatus, Device and Medium

In some example embodiments, an apparatus capable of performing the method 700 (for example, the control plane device 203 in FIG. 2) may comprise means for performing the respective operations of the method 700. The means may be implemented in any suitable form. For example, the means may be implemented in a circuitry or software module. The apparatus may be implemented as or included in the control plane device 203 in FIG. 2.

In some example embodiments, the apparatus comprises means for transmitting, to a policy device, a characteristic of a control plane device; and means for receiving, from the policy device, a control plane policy for the control plane device, where the control plane device hosts at least one of one or more state or context of one or more terminal devices.

In some example embodiments, the control plane policy may be used by the control plane device.

In some example embodiments, the control plane policy indicates a list of cells to be used by the control plane device.

In some example embodiments, the characteristic of the control plane device is related to a network quality of service of the control plane device.

In some example embodiments, the apparatus further comprises: means for transmitting, to the policy device, a request for the control plane policy, where the control plane policy is received from the policy device in response to transmitting the request for the control plane policy.

In some example embodiments, the apparatus further comprises: means for receiving, from the policy device, an indication that a new control plane policy is available, where the request for the control plane policy is transmitted to the policy device in response to receiving the indication that the new control plane policy is available.

In some example embodiments, the apparatus further comprises: means for transmitting, to the policy device, a subscription for a policy update, where the indication that the new control plane policy is available is received from the policy device after transmitting the subscription.

In some example embodiments, the apparatus further comprises: means for transmitting, to the policy device, a registration request including the characteristic of a control plane device.

In some example embodiments, the apparatus further comprises: means for transmitting, to a load balancing device, a policy update request indicating an updated characteristic of the control plane device.

In some example embodiments, the apparatus further comprises: means for receiving, from a user plane device, a message from a terminal device of the one or more terminal devices; and means for transmitting, based on the control plane policy, a second routing identifier to the terminal device, the second routing identifier being mapping to a list of cells.

In some example embodiments, the apparatus further comprises: means for in response to receiving the message from the terminal device, determining that a radio resource management configuration for the terminal device is unavailable at the control plane device; means for based on the determining, transmitting, to a radio resource management device, a request for the radio resource management configuration; and means for receiving, from the radio resource management device, the radio resource management configuration, where the second routing identifier is transmitted to the terminal device after receiving the radio resource management configuration from the radio resource management device.

In some example embodiments, the control plane policy includes one or more categories of one or more cells in a list of cells, and the apparatus further comprises: means for determining, based on the one or more categories of the one or more cells, that at least one cell of the one or more cell is to be used by a further control plane device; and means for transmitting, to the further control plane device, at least one of at least one of state or context of at least one terminal device from the one or more terminal devices, the at least one terminal device being served by the at least one cell to be used by the further control plane device.

In some example embodiments, the control plane device is in a distributed unit of an access network device, or a distributed service device.

In some example embodiments, the apparatus further comprises means for performing other operations in some example embodiments of the method 700 or the control plane device 203. In some example embodiments, the means comprises at least one processor; and at least one memory storing instructions that, when executed by the at least one processor, cause the performance of the apparatus.

In some example embodiments, an apparatus capable of performing the method 800 (for example, the policy device 204 in FIG. 2) may comprise means for performing the respective operations of the method 800. The means may be implemented in any suitable form. For example, the means may be implemented in a circuitry or software module. The apparatus may be implemented as or included in the policy device 204 in FIG. 2.

In some example embodiments, the apparatus comprises means for receiving, from a plurality of control plane devices, respective characteristics of the plurality of control plane devices, the plurality of control plane devices hosting at least one of one or more states or context of one or more terminal devices; means for determining, based on the respective characteristics of the plurality of control plane devices, one or more user plane policies for the plurality of control plane devices and a plurality of control plane policies for the plurality of control plane devices.

In some example embodiments, a user plane policy of the one or more user plane policies may indicate a routing rule for one or more control plane devices of the plurality of control plane devices, and a control plane policy of the plurality of control plane policies may be used by the control plane device of the plurality of control plane policies.

In some example embodiments, the control plane policy indicates a list of cells to be used by the control plane device.

In some example embodiments, the plurality of control plane devices are in different locations.

In some example embodiments, the means for receiving the respective characteristics of the plurality of control plane devices comprises: means for receiving, from the plurality of control plane devices, a plurality of registration requests including the respective characteristics of the plurality of control plane devices.

In some example embodiments, the respective characteristic of the plurality of control plane devices are related to respective network qualities of service of the plurality of control plane devices.

In some example embodiments, the apparatus further comprises: means for transmitting, to a load balancing device, the respective characteristics of the plurality of control plane devices; and means for receiving, from the load balancing device, the one or more user plane policies and the plurality of control plane policies for the plurality of control plane devices.

In some example embodiments, the apparatus further comprises: means for receiving, from a load balancing device, a policy update indicating at least one of an updated user plane policy or an updated control plane policy for at least one control plane device of the plurality of control plane devices.

In some example embodiments, the apparatus further comprises: means for receiving, from a user plane device, a request for a user plane policy; and means for transmitting, to the user plane device, a user plane policy of the one or more user plane policies for the plurality of control plane devices.

In some example embodiments, the apparatus further comprises: means for transmitting, to the user plane device, an indication that a new user plane policy is available, where the request for the user plane policy is received from the user plane device in response to transmitting the indication that the new user plane policy is available.

In some example embodiments, the apparatus further comprises: means for receiving, from the user plane device, a subscription for a policy update, where the indication that the new control plane policy is available is transmitted after receiving the subscription from the user plane device.

In some example embodiments, the routing rule for the one or more control plane devices of the plurality of control plane devices includes one or more first routing identifiers mapping to the one or more control plane devices.

In some example embodiments, the routing rule for the one or more control plane devices of the plurality of control plane devices is associated with at least one of: the one or more terminal devices, or one or more services of the one or more terminal devices.

In some example embodiments, the apparatus further comprises: means for receiving, from a control plane device of the plurality of control plane devices, a request for a control plane policy; and transmitting, to the control plane device, a control plane policy of the plurality of control plane policies for the control plane device.

In some example embodiments, the apparatus further comprises: means for transmitting, to the control plane device, an indication that a new control plane policy is available, where the request for the control plane policy is received from the control plane device in response to transmitting the indication that the new control plane policy is available.

In some example embodiments, the apparatus further comprises: means for receiving, from the control plane device, a subscription for a policy update, where the indication that the new control plane policy is available is transmitted after receiving the subscription from the control plane device.

In some example embodiments, a control plane policy of the plurality of control plane policies includes a second routing identifier mapping to a list of cells to be used by the control plane device of the plurality of control plane policies.

In some example embodiments, the apparatus further comprises means for performing other operations in some example embodiments of the method 900 or the policy device 204. In some example embodiments, the means comprises at least one processor; and at least one memory storing instructions that, when executed by the at least one processor, cause the performance of the apparatus.

In some example embodiments, an apparatus capable of performing the method 900 (for example, the load balancing device 205 in FIG. 2) may comprise means for performing the respective operations of the method 900. The means may be implemented in any suitable form. For example, the means may be implemented in a circuitry or software module. The apparatus may be implemented as or included in the load balancing device 205 in FIG. 2.

In some example embodiments, the apparatus comprises means for receiving, from a policy device, respective characteristics of a plurality of control plane devices, the plurality of control plane devices hosting at least one of one or more states or context of one or more terminal devices; and means for transmitting, to the policy device, based on the respective characteristics of the plurality of control plane devices, at least one of one or more user plane policies or a plurality of control plane policies for the plurality of control plane devices.

In some example embodiments, a user plane policy of the one or more user plane policies may indicate a routing rule for one or more control plane devices of the plurality of control plane devices, and a control plane policy of the plurality of control plane policies may be used by a control plane device of the plurality of control plane devices.

In some example embodiments, the control plane policy of the plurality of control plane policies indicates a list of cells to be used by the control plane device of the plurality of control plane devices.

In some example embodiments, the plurality of control plane entities are in different locations.

In some example embodiments, the respective characteristic of the plurality of control plane devices are related to respective network qualities of service of the plurality of control plane devices.

In some example embodiments, the apparatus further comprises: means for receiving, from a control plane device of the plurality of control plane devices, a policy update request indicating an updated characteristic of the control plane device; and means for transmitting, to the policy device, a policy update indicating at least one of an updated user plane policy or an updated control plane policy for at least one control plane device of the plurality of control plane devices.

In some example embodiments, the routing rule for the one or more control plane devices of the plurality of control plane devices includes one or more first routing identifiers mapping to the one or more control plane devices.

In some example embodiments, a control plane policy of the plurality of control plane policies includes a second routing identifier mapping to a list of cells to be used by the control plane device of the plurality of control plane policies.

In some example embodiments, the apparatus further comprises means for performing other operations in some example embodiments of the method 900 or the load balancing device 205. In some example embodiments, the means comprises at least one processor; and at least one memory storing instructions that, when executed by the at least one processor, cause the performance of the apparatus.

In some example embodiments, an apparatus capable of performing the method 1000 (for example, the user plane device 202 in FIG. 2) may comprise means for performing the respective operations of the method 1000. The means may be implemented in any suitable form. For example, the means may be implemented in a circuitry or software module. The apparatus may be implemented as or included in the user plane device 202 in FIG. 2.

In some example embodiments, the apparatus comprises means for receiving, from a policy device, a user plane policy for one or more control plane devices, where the one or more control plane devices host at least one of one or more states or context of one or more terminal devices; means for receiving a message from a terminal device of the one or more terminal devices; and means for forwarding, based on the routing rule, the message to a target control plane device of the one or more control plane devices.

In some example embodiments, the user plane policy may indicate a routing rule based on one or more characteristics of the one or more control plane devices.

In some example embodiments, the apparatus further comprises: means for transmitting, to the policy device, a request for the user plane policy, where the user plane policy is received from the policy device in response to transmitting the request for the user plane policy.

In some example embodiments, the apparatus further comprises: means for receiving, from the policy device, an indication that a new user plane policy is available, where the request for the user plane policy is transmitted in response to receiving the indication that the new user plane policy is available.

In some example embodiments, the apparatus further comprises: means for transmitting, to the policy device, a subscription for a policy update, where the indication that the new control plane policy is available is received from the policy device after transmitting the subscription.

In some example embodiments, the one or more characteristics of the one or more control plane devices are related to one or more network qualities of service of the one or more control plane devices.

In some example embodiments, the routing rule is associated with at least one of: the one or more terminal devices, or one or more services of the one or more terminal devices.

In some example embodiments, the routing rule includes one or more first routing identifiers mapping to the one or more control plane devices.

In some example embodiments, the routing rule indicates a plurality of control plane devices ranking in an order, the apparatus further comprises: selecting, based on the order, a first control plane device from the one or more control plane devices; and based on determining that the first control plane device is unavailable, selecting, based on the order, a second control plane device from the one or more control plane devices as the target control plane device

In some example embodiments, the user plane device comprises a user plane entity of a distributed unit of an access network device.

In some example embodiments, the apparatus further comprises means for performing other operations in some example embodiments of the method 1000 or the user plane device 202. In some example embodiments, the means comprises at least one processor; and at least one memory storing instructions that, when executed by the at least one processor, cause the performance of the apparatus.

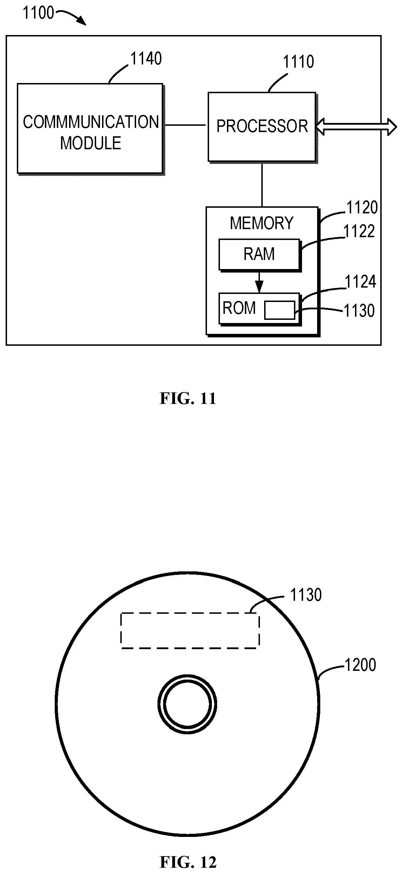

FIG. 11 is a simplified block diagram of a device 1100 that is suitable for implementing example embodiments of the present disclosure. The device 1100 may be provided to implement a communication device, for example, the user plane device 202, the control plane device 203, the policy device 204 or the load balancing device 120 as shown in FIG. 2. As shown, the device 1100 includes one or more processors 1110, one or more memories 1120 coupled to the processor 1110, and one or more communication modules 1140 coupled to the processor 1110.

The communication module 1140 is for bidirectional communications. The communication module 1140 has one or more communication interfaces to facilitate communication with one or more other modules or devices. The communication interfaces may represent any interface that is necessary for communication with other network elements. In some example embodiments, the communication module 1140 may include at least one antenna.

The processor 1110 may be of any type suitable to the local technical network and may include one or more of the following: general purpose computers, special purpose computers, microprocessors, digital signal processors (DSPs) and processors based on multicore processor architecture, as non-limiting examples. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a Read Only Memory (ROM) 1124, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 1122 and other volatile memories that will not last in the power-down duration.

A computer program 1130 includes computer executable instructions that are executed by the associated processor 1110. The instructions of the program 1130 may include instructions for performing operations/acts of some example embodiments of the present disclosure. The program 1130 may be stored in the memory, e.g., the ROM 1124. The processor 1110 may perform any suitable actions and processing by loading the program 1130 into the RAM 1122.

The example embodiments of the present disclosure may be implemented by means of the program 1130 so that the device 1100 may perform any process of the disclosure as discussed with reference to FIG. 2 to FIG. 10. The example embodiments of the present disclosure may also be implemented by hardware or by a combination of software and hardware.

In some example embodiments, the program 1130 may be tangibly contained in a computer readable medium which may be included in the device 1100 (such as in the memory 1120) or other storage devices that are accessible by the device 1100. The device 1100 may load the program 1130 from the computer readable medium to the RAM 1122 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 12 shows an example of the computer readable medium 1200 which may be in form of CD, DVD or other optical storage disk. The computer readable medium 1200 has the program 1130 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computerexecutable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A policy device (204) comprising:
at least one processor; and
at least one memory storing instructions that, when executed by the at least one processor, cause the policy device (204) at least to:
receive (215, 810), from a plurality of control plane devices, respective characteristics of the plurality of control plane devices, the plurality of control plane devices hosting at least one of one or more states or context of one or more terminal devices; and
determine (220, 820), based on the respective characteristics of the plurality of control plane devices, one or more user plane policies for the plurality of control plane devices and a plurality of control plane policies for the plurality of control plane devices.

2. The policy device (204) of claim 1, wherein the at least one memory and the at least one processor cause the policy device (204) to:
receive, from the plurality of control plane devices, a plurality of registration requests including the respective characteristics of the plurality of control plane devices.

3. The policy device (204) of any of claims 1-2, wherein the at least one memory and the at least one processor further cause the policy device (204) to:
transmit (223), to a load balancing device (205), the respective characteristics of the plurality of control plane devices; and
receive (232), from the load balancing device (205), the one or more user plane policies and the plurality of control plane policies for the plurality of control plane devices.

4. The policy device (204) of any of claims 1-3, wherein the at least one memory and the at least one processor further cause the policy device (204) to:
receive, from a user plane device (202), a request for a user plane policy; and
transmit (237), to the user plane device (202), a user plane policy of the one or more user plane policies for the plurality of control plane devices.

5. The policy device (204) of claim 4, wherein the at least one memory and the at least one processor further cause the policy device (204) to:
transmit, to the user plane device (202), an indication that a new user plane policy is available,
wherein the request for the user plane policy is received from the user plane device in response to transmitting the indication that the new user plane policy is available.

6. The policy device (204) of claim 5, wherein the at least one memory and the at least one processor further cause the policy device (204) to:
receive, from the user plane device, a subscription for a policy update,
wherein the indication that the new control plane policy is available is transmitted after receiving the subscription from the user plane device.

7. The policy device (204) of any of claims 1-6, wherein the at least one memory and the at least one processor further cause the policy device (204) to:
transmit, to a control plane device (203) of the plurality of control plane devices, an indication that a new control plane policy is available;
receive, from the control plane device (203), a request for a control plane policy; and
transmit (233), to the control plane device (203), a control plane policy of the plurality of control plane policies for the control plane device.

8. The policy device (204) of claim 2-7, wherein the at least one memory and the at least one processor further cause the policy device (204) to:
receive, from the control plane device (203), a subscription for a policy update,
wherein the indication that the new control plane policy is available is transmitted after receiving the subscription from the control plane device.

9. A load balancing device (205) comprising:
at least one processor; and
at least one memory storing instructions that, when executed by the at least one processor, cause the load balancing device (205) at least to:
receive (225, 910), from a policy device (204), respective characteristics of a plurality of control plane devices, the plurality of control plane devices hosting at least one of one or more states or context of one or more terminal devices; and
transmit (230, 920), to the policy device (204), based on the respective characteristics of the plurality of control plane devices, at least one of one or more user plane policies or a plurality of control plane policies for the plurality of control plane devices.

10. The load balancing device (205) of claim 9, wherein the at least one memory and the at least one processor further cause the load balancing device (205) to:
receive, from a control plane device (203) of the plurality of control plane devices, a policy update request indicating an updated characteristic of the control plane device; and
transmit, to the policy device (204), a policy update indicating at least one of an updated user plane policy or an updated control plane policy for at least one control plane device of the plurality of control plane devices.

11. A control plane device (203) comprising:
at least one processor; and
at least one memory storing instructions that, when executed by the at least one processor, cause the control plane device (203) at least to:
transmit (210, 710), to a policy device (204), a characteristic of a control plane device; and
receive (235, 720), from the policy device (204), a control plane policy for the control plane device,
wherein the control plane device (203) hosts at least one of one or more state or context of one or more terminal devices.

12. A method (800) comprising:
receiving (215, 810), at a policy device (204), from a plurality of control plane devices, respective characteristics of the plurality of control plane devices, the plurality of control plane devices hosting at least one of one or more states or context of one or more terminal devices; and
determining (220, 820), based on the respective characteristics of the plurality of control plane devices, one or more user plane policies for the plurality of control plane devices and a plurality of control plane policies for the plurality of control plane devices.

13. A method (900) comprising:
receiving (225, 910), at a load balancing device (205), from a policy device (204), respective characteristics of a plurality of control plane devices, the plurality of control plane devices hosting at least one of one or more states or context of one or more terminal devices; and
transmitting (230, 920), to the policy device (204), based on the respective characteristics of the plurality of control plane devices, at least one of one or more user plane policies or a plurality of control plane policies for the plurality of control plane devices.

14. A method (700) comprising:
transmitting (210, 710), at a control plane device (203), to a policy device (204), a characteristic of a control plane device; and
receiving (235, 720), from the policy device (204), a control plane policy for the control plane device (203),
wherein the control plane device (203) hosts at least one of one or more states or context of one or more terminal devices.

15. A computer readable medium (1200) comprising instructions (1130) stored thereon for causing an apparatus at least to perform the method (800) of claim 12, the method (900) of claim 13, or the method (700) of claim 14.
